# EUROPÄISCHE PATENTSCHRIFT

(11) **EP 3 953 126 B1**
(45) Veröffentlichungstag und Bekanntmachung des Hinweises auf die Patenterteilung: **23.08.2023**
(21) Anmeldenummer: 20721386.9
(22) Anmeldetag: 09.04.2020
(51) Int. Cl.: B29B 9/06, B65G 53/16

(54) **ANORDNUNG ZUM GRANULIEREN VON EXTRUDIERTEM MATERIAL**
ASSEMBLY FOR GRANULATING EXTRUDED MATERIAL
AGENCEMENT DESTINÉ À LA GRANULATION D'UN MATÉRIAU EXTRUDÉ

(30) Priorität: 11.04.2019 AT 503292019
(43) Veröffentlichungstag der Anmeldung: 16.02.2022
(73) Patentinhaber: EREMA Engineering Recycling Maschinen und Anlagen Gesellschaft m.b.H., 4052 Ansfelden (AT)
(72) Erfinder: AIGNER, Michael, 4060 Leonding (AT); WAGNER, Christian, 4212 Neumarkt im Mühlkreis (AT); HUBER, Roland, 4303 St. Pantaleon (AT); FEICHTINGER, Klaus, 4040 Linz (AT)
(74) Vertreter: Wildhack & Jellinek
(86) Internationale Anmeldenummer: PCT/AT2020/060142
(87) Internationale Veröffentlichungsnummer: WO 2020/206476

(56) Entgegenhaltungen:
- EP-A2- 2 052 825
- EP-B1- 3 043 973
- CN-B- 104 385 478
- CN-U- 203 141 679
- CN-U- 203 739 049
- CN-U- 203 888 063
- KR-A- 20100 026 301

## Beschreibung

Die Erfindung betrifft eine Anordnung zum Granulieren von plastifiziertem, oder zumindest teilweise erweichtem bzw. zumindest teilweise aufgeschmolzenem, vorzugsweise extrudiertem, Material gemäß dem Oberbergriff des Patentanspruchs 1.

Derartige Anordnungen sind beispielsweise aus der EP 2 052 825 A2 bekannt. Bei dieser Anordnung ist die Auftrennung und Abfuhr der aus dem Extruder kommenden Granulatteilchen nicht optimal und es kommt auch zu Ablagerungen im Transportweg.

In der CN 203 141 679 U ist eine Anordnung zum Granulieren von Polymermaterial beschrieben, umfassend ein Gehäuse mit einer Gaszuleitung und einer gegenüberliegend am Gehäuse angeschlossenen, einen rechteckigen Querschnitt aufweisenden Gasableitung, sowie eine Granuliereinheit mit einem Abstreifer für das aus einer Lochplatte austretende Material. Die beiden Seitenwandflächen der Gasableitung sowie der Gaszuleitung, die senkrecht zu einer zur Ebene der Lochplatte senkrechten Ebene stehen, schließen miteinander jeweils einen sich vom Gehäuse weg öffnenden Winkel ein. Aufgabe der vorliegenden Erfindung ist es, die Granulierung von plastifizierten Materialien, d.h. von erweichten, teilerweichten, teilaufgeschmolzenen bis aufgeschmolzenen, thermoplastischen oder zumindest teilthermoplastischen Teilchen, vorzugsweise Polymeren, zu verbessern.

Ziel ist es vor allem, die abgetrennten Teilchen möglichst rasch zu verfestigen und dabei sowohl eine gegenseitige Kollision der Teilchen als auch eine Kollision der Teilchen mit den Innenwandungen des Gehäuses bzw. der weiteren, die Teilchen abführenden Leitungen zu verhindern.

Diese Aufgabe wird durch die kennzeichnenden Merkmale des Patentanspruchs 1 gelöst. Erfindungsgemäß ist dabei vorgesehen, dass in einer parallel zur Ebene der Lochplatte und/oder der Vorderwand des Gehäuses verlaufenden Ebene bzw. Schnittebene E-E, die beiden senkrecht zu dieser Ebene stehenden seitlichen Wandflächen der Gasableitung miteinander einen Winkel α2 einschließen, und die beiden senkrecht zu dieser Ebene stehenden seitlichen Wandflächen der Gaszuleitung einen Winkel α1 einschließen, wobei sich die beiden Winkel zum Gehäuse hin öffnen und wobei der Winkel α1 größer ist als der Winkel α2.

Es hat sich gezeigt, dass die gewünschten Effekte erreicht werden können, wenn die speziellen geometrischen Formen und Dimensionen für die erfindungsgemäße Anordnung eingehalten werden. Dadurch wird gewährleistet, dass die Teilchen sicher und ohne gegenseitige Wechselwirkungen vom Gasstrom mitgenommen werden können.

Die ausgebildeten Materialstränge, die von der Zufuhr- oder Plastifizierungseinheit kommen und aus der Lochplatte austreten, werden im praktischen Betrieb mit Abstreifern, z.B. Messern, Schabern od. dgl. zu Granulaten abgelängt. Als Abstreifer kann z.B. eine Anordnung mit einem oder mehreren rotierenden Messern eingesetzt werden, die auf einem Messerträger befestigt sind und, wie auch im erfindungsgemäßen Fall, von einem außerhalb des Gehäuses liegenden Antrieb, z.B. einem Elektromotor, angetrieben werden.

Beim Abtrennen werden die Materialstränge bzw. die abgetrennten Teilchen in ein speziell geformtes Gehäuse gedrückt, wobei in dieses Gehäuse von einer Seite her, vorteilhafterweise von unten, ein Gasstrom eingeleitet wird. Dieser Gasstrom wird mittels eines Gebläses erzeugt. Der durch das Gehäuse geführte Gasstrom kann aus Luft, vorteilhafterweise getrockneter und/oder gekühlter und/oder temperierter Luft, also auch aus Edelgasen oder reaktiven Gasen oder Gasgemischen beliebiger Art bestehen.

An das Gehäuse ist eine Gasableitung angeschlossen, die speziell ausgeformt ist, um sowohl den vollständigen Abtransport der ausgebildeten Granulate rasch sicherzustellen, als auch die ausgeformten Granulate vereinzelt und untereinander kontaktfrei zu halten. Es erfolgt dabei eine Zufuhr des Gasstroms von der einen Seite der in das Gehäuse mündenden Lochplatte mit der Gaszuleitung und eine Abfuhr der Gase bzw. ein Abtransport der Teilchen mit einer in einem gegenüberliegenden Bereich des Gehäuses abgehenden Gasableitung. Weiters wird ein Kontakt der Granulate mit den Wandungen des Gehäuses bzw. den Gehäuseinnenwänden weitgehend unterbunden bzw. minimiert, um eine Abbremsung und/oder Ablagerung der Granulatteilchen zu verhindern. Auch ein Ankleben der ausgeformten Granulatteilchen an der Wand wird vermieden. Wesentlich ist es jedoch vor allem, dass erfindungsgemäß ein Verkleben der Granulatteilchen untereinander weitestgehend verhindert wird.

Die extrudierten Materialien werden mit einem durch die Anordnung geführten Medium, insbesondere mit einem Gas, transportiert. Dieses Gas kann jedes beliebige Gas oder Gasgemisch sein, insbesondere wird Luft eingesetzt. Der eingesetzte Gasstrom transportiert die Teilchen aus dem Gehäuse ab, wobei diese Materialteilchen bzw. Granulate bzw. Würstchen od. dgl. dabei mit Hilfe des Gasstroms abgekühlt und/oder verfestigt und/oder chemisch ausreagiert werden, z.B. durch thermische Beeinflussung, Abkühlung bzw. durch eine durch das Gas initiierte bzw. induzierte Reaktion.

Die zu granulierenden Materialien, zB Polymere, können mit Fasern verstärkt und/oder auch teilvernetzt sein. Sie können auf Polyester, Polyolefinen oder auch Polyamiden basieren. Es ist prinzipiell möglich, alle zumindest teilweise plastifizierbaren, vorzugsweise extrudierbaren, Materialien, sofern sie entsprechend erweichbar bzw. aufschmelzbar und in Teilchen überführbar bzw. verfestigbar sind, mit der erfindungsgemäßen Anordnung vom Austrittsort abzutransportieren und während des Abtransports physikalisch oder chemisch zu behandeln bzw. reagieren zu lassen bzw. zu verfestigen. Die erfindungsgemäße Anordnung ist für alle Materialien einsetzbar, bei denen eine Ausformung von Strängen in ein Granulat durchführbar ist. Dazu gehören Teige, keramische Massen, Gummi, thermoplastische Polyurethane, Silikone, usw.

Grundsätzlich soll es gelingen, die Verfestigung der Materialien durch das eingesetzte Gas, insbesondere Luft, zu erreichen. Dabei können auch verdampfende Medien zu Hilfe genommen werden, wie z.B. Wasser, wenn bei Verdampfung von Wasser bzw. derartigen Medien eine Verfestigung der extrudierten und zu Teilchen zu formenden Materialien erreicht werden kann. Bei einer Verdampfung kann auch die dabei auftretende Abkühlung ausgenützt werden, insbesondere dann, wenn keine nennenswerte Kondensation und keine Flüssigphase dominant werden.

Die Merkmale der abhängigen Ansprüche stellen bevorzugte Weiterentwicklungen der Anordnung mit besonderen technischen Effekten dar:
Eine beträchtliche Verbesserung der Granulierung wird erreicht, wenn bei einer bevorzugten Ausführungsform der Erfindung vorgesehen ist, dass in der Ebene parallel zur Ebene der Lochplatte bzw. in der Schnittebene der Abstand der senkrecht zu dieser Ebene stehenden Seitenwände des Gehäuses in ihrem strömungsabwärts gelegenen Endbereich sowie der gegenseitige Abstand der daran anschließenden seitlichen, ebenfalls senkrecht zu dieser Ebene E-E stehenden Wandflächen der Gasableitung einen Wert b von 10 * d ≥ b ≥ 4 * d, vorzugsweise 8 * d ≥ b ≥ 5 * d, besitzt, wobei der Wert von d berechnet wird, indem der gemeinsame Flächenschwerpunkt für alle vorhandenen Ausnehmungen der Lochplatte ermittelt wird, für jede Ausnehmung der Abstand des Flächenschwerpunkts der jeweiligen Ausnehmung von dem gemeinsamen Flächenschwerpunkt ermittelt wird, die für die vorhandenen Ausnehmungen ermittelten Abstandswerte arithmetisch gemittelt werden und der doppelte Wert des arithmetischen Mittels als Wert d festgelegt wird.

In diesem Zusammenhang ist es besonders vorteilhaft, wenn der Wert b dem größten gegenseitigen Abstand der Seitenwände des Gehäuses an ihrem strömungsabwärts gelegenen Endbereich sowie der seitlichen Wandflächen der Gasableitung an ihrem strömungsaufwärts gelegenen Endbereich entspricht.

Eine bevorzugte, strömungsgünstige Ausführungsform sieht vor, dass die beiden Seitenwandflächen der Gasableitung, die senkrecht zu einer zur Ebene E-E bzw. senkrecht zu einer zur Ebene der Lochplatte senkrechten Ebene stehen, miteinander einen Winkel β2 einschließen, und die ebenfalls senkrecht zu einer zur Ebene E-E bzw. senkrecht zu einer zur Lochplatte senkrechten Ebene verlaufenden Seitenwandflächen der Gaszuleitung miteinander einen Winkel β1 einschließen, wobei sich die beiden Winkel β1, β2 vom Gehäuse weg gerichtet öffnen und wobei der Winkel β1 größer ist als der Winkel β2.

Es ist weiters vorteilhaft, wenn die zentrale Achse der Zufuhr- oder Plastifizierungseinheit, vorzugsweise eines Extruders, und/oder der gemeinsame Flächenschwerpunkt aller vorhandenen Ausnehmungen bzw. die durch den Flächenschwerpunkt verlaufende Mittellinie der Lochplatte mittig bezüglich der Seitenwände des Gehäuses liegt und/oder in einer senkrecht zur Ebene der Lochplatte stehenden und die Mittellinie des Gehäuses enthaltenden Symmetrieebene der Gaszuleitung und/oder der Gasableitung und/oder Gehäuses gelegen ist. Die Lage der Lochplatte in Bezug auf das Gehäuse spielt eine wichtige Rolle für das Transportverhalten der Anordnung.

Die Lochplatte mit den Ausnehmungen zum Durchtritt des zu granulierenden Materials bzw. eine durch den Flächenschwerpunkt der Ausnehmungen der Lochplatte verlaufende, senkrechte Mittellinie der Lochplatte kann im Zentrum des Gehäuses sitzen bzw. durch dieses verlaufen. Dieses Zentrum liegt mittig zwischen den Seitenwänden des Gehäuses bzw. auf einer in Strömungsrichtung durch das Gehäuse verlaufenden, zur Ebene der Lochplatte senkrecht stehenden Symmetrieebene, die die Mittellinie des Gehäuses enthält. Das Zentrum kann aber auch von den Schnittpunkten der jeweiligen Flächendiagonalen der Vorderwand und Rückwand des Gehäuses bestimmt werden.

Für eine Reihe von Anwendungsfällen, insbesondere für klebrige Materialien, hat es sich bewärt, wenn die zentrale Achse der Zufuhr- bzw. Plastifizierungseinheit, vorzugsweise des Extruders, und/oder der gemeinsame Flächenschwerpunkt aller vorhandenen Ausnehmungen bzw. die durch diesen verlaufende Mittellinie der Lochplatte bezüglich einer Mittellinie des Gehäuses und/oder einer senkrecht zur Ebene der Lochplatte stehenden und die Mittellinie des Gehäuses enthaltenden Symmetrieebene der Gaszuleitung und/oder der Gasableitung und/oder bezüglich der Mitte zwischen den Seitenflächen des Gehäuses seitlich versetzt ist, wobei die seitliche Versetzung um einen Wert c, mit c ≤ 2,5 * d, in den Bereich des Gehäuses erfolgt ist, in dem die Drehrichtung des Abstreifers und die Richtung der Gasströmung in die gleiche Richtung verlaufen. Die Lochplatte bzw. deren Mittelpunkt ist damit in Relation zum Mittelpunkt des Gehäuses bzw. zur Mittellinie des Gehäuses versetzt. Der Versatz erfolgt somit derart, dass - betrachtet von der Stirnfläche des Gehäuses gegen den Austritt des Materials aus der Lochplatte - ein größerer Wandabstand in jenem Bereich entsteht, in dem sich die rotierenden Werkzeuge bzw. Messer des Abstreifers gegen die Hauptluftströmung bewegen. Abgeschnittene Partikel bekommen einen Impuls gegen die Förderrichtung und werden daher langsamer, da sie sich gegen die Förderrichtung der Luft bewegen. Die Gefahr eines Auftreffens derartiger Partikel auf die Gehäusewand wird durch diese Maßnahme verringert.

Unter besonders klebrigen Materialien werden Materialien verstanden, bei denen nach dem Abtrennen der Granulatteilchen die Abkühlzeit im Gasstrom, so wie sie in der Praxis zum Einsatz kommt, nicht ausreicht, um die Klebeneigung dieser Granulatteilchen deutlich zu reduzieren. Damit wird die Gefahr, dass kollidierende Granulatteilchen aneinander haften bleiben oder sich an der Gehäuseinnenwand aufbauen, beträchtlich erhöht. Deshalb wird in derartigen Fällen die Lochplatte im Gehäuse nicht zentrisch angeordnet, sondern die Lochplatte wird relativ zur Längsmittellinie bzw. Längsmittelsymmetrieachse des Gehäuses versetzt, womit ein größerer Wandabstand in jenem Bereich ausgebildet wird, bei dem sich die rotierenden Messer des Abstreifers gegen die Richtung der Gasströmung bewegen.

Insbesondere für klebrige Materialien kann es des Weiteren von Vorteil sein, wenn die zentrale Achse der Zufuhr- bzw. Plastifizierungseinheit, vorzugsweise eines Extruders, und/oder der gemeinsame Flächenschwerpunkt aller vorhandenen Ausnehmungen bzw. eine durch diesen verlaufende Mittellinie der Lochplatte, gegenüber der Stelle bzw. Querschnittsfläche des Gehäuses, an der - in Strömungsrichtung gesehen - die Seitenwände des sich verbreiternden Gehäuses den gegenseitigen Abstand b angenommen haben, strömungsaufwärts in einem Abstand a angeordnet ist, wobei a ≤ 1,1 * d ist. In der Praxis wird angenommen, dass das Gehäuse fix steht und die Achse der Zufuhr- bzw. Plastifizierungseinheit sich relativ zum Gehäuse verschiebt. Die Lochplatte wird mit der Strömungsrichtung in Relation zum Gehäuse versetzt.

Es hat sich als vorteilhaft erwiesen, wenn in einem Übergangsbereich vom Gehäuse zur Gasableitung das Gehäuse und die Gasableitung die gleiche rechteckförmige Querschnittsfläche besitzen, wobei die Länge der längeren Rechteckseite den Wert b besitzt. Damit ergibt sich ein wirbelfreier Übergang vom Gehäuse in die Gasableitung. In diesem Zusammenhang ist es auch von Vorteil, wenn die Querschnittsfläche des Gehäuses im Übergangsbereich zur Gasableitung nur 5 bis 20 %, vorzugsweise 10 bis 15 %, größer ist als die Querschnittsfläche der Gasableitung in ihrem gehäusefernen Endbereich. Ferner ist es vorteilhaft, die Querschnittsfläche des Gehäuses auf der Höhe der Lochplatte um 25 bis 35 % größer als die Querschnittsfläche der Gaszuleitung in ihrem strömungsaufwärtigen Ende bzw. ihrem Anschluss an das Gebläse zu gestalten. Damit ergibt sich ein weitgehend wirbelfreier Transport über die gesamte Anordnung mit einer Düsenwirkung im Gehäuse. Von Vorteil ist es ferner, wenn die Querschnittsfläche des Gehäuses von der Höhe der Lochplatte bis zum Übergangsbereich zur Gasableitung zur Ausbildung eines Diffusors um 10 bis 20 % zunimmt.

Um den gegenseitigen Kontakt der Granulatteilchen zu verringern, ist es von Vorteil, wenn in der Ebene parallel zur Lochplatte die gegenüberliegenden Seitenwandflächen des Gehäuses zumindest über einen Teilbereich ihrer Längserstreckung einen von der Gaszuleitung zur Gasableitung hin divergierenden, vom Inneren des Gehäuses aus gesehen konvex gekrümmten, insbesondere kontinuierlichen Verlauf besitzen. Die Übergänge zwischen den einzelnen Abschnitten werden vorteilhafterweise in Form von runden, bogenförmigen Elementen ausgebildet, können jedoch auch in segmentierter Bauweise realisiert werden. Bei einer Segmentierung können auch bei kleinen Winkeln bei den Segmentübergängen Probleme im Hinblick auf die Anlagerung von Staub und Material in den Ecken und Kanten eintreten. Des Weiteren nimmt die Qualität der Luftführung in derartigen Bereichen ab, da dort unerwünschte Verwirbelungen auftreten können.

Bevorzugt ist es, wenn die Vorderwand und die Rückwand des Gehäuses parallel zueinander und/oder parallel zur Ebene der Lochplatte ausgerichtet sind. Die parallelen Wandabschnitte, die das Gas im Gehäuse durchströmt, verbessern den Abtransport der abgetrennten Teilchen in Richtung Gasableitung bzw. die Düsenwirkung.

Ein einfacher Aufbau der erfindungsgemäßen Anwendung ergibt sich, wenn der Abstreifer eine Antriebswelle besitzt, die im Gehäuse von der Rückwand des Gehäuses zu der im Bereich der Vorderwand des Gehäuses gelegenen und den Endbereich der Zufuhr- oder Plastifizierungseinheit, vorzugsweise des Extruders, darstellenden Lochplatte verläuft. Ein strömungsgünstiger Anschluss an Einheiten zur Weiterverarbeitung bzw. -behandlung der Granulatteilchen ergibt sich, wenn an die Gasableitung ein Übergangsteil angeschlossen ist, der den rechteckförmigen Querschnitt der Gasableitung in einen Querschnitt mit rundem oder gekrümmtem Umfang überleitet, wobei der Übergangsteil sich strömungsabwärts verjüngende Wandabschnitte aufweist, die insbesondere unter dem gleichen Winkel α2 bzw. dem gleichen Winkel β2 geneigt an die seitlichen Wandflächen bzw. Seitenwandflächen der Gasableitung anschließen bzw. diese, insbesondere in Form von Dreiecken, verlängern. Ein bezüglich des Teilchentransports und einer Verhinderung ihres Zusammenklebens vorteilhafter Aufbau der Anordnungen ergibt sich, wenn der Scheitel der Winkel α1, α2 und/oder β1, β2 auf der Mittellinie bzw. einer Längssymmetrieebene durch die Gaszuleitung, das Gehäuse und die Gasableitung liegt.

Als günstig für den Teilchentransport hat es sich erwiesen, wenn der Winkel α2 das 0,25-fache bis 0,75-fache, vorzugsweise das 0,4-fache bis 0,6-fache, des Winkels α1 beträgt. Ein Zusammenkleben der Teilchen wird verringert, wenn der Winkel α1 < 180 ° ist, vorzugsweise im Bereich von 15 ° bis 110 ° liegt und insbesondere ein spitzer Winkel von 20 ° bis 60 ° ist, und/oder wenn der Winkel α2 < 180 ° ist und insbesondere ein spitzer Winkel, vorzugsweise im Bereich von 3,0 ° bis 82,5 °, insbesondere von 6 ° bis 36 °, ist.

Günstig für den Teilchentransport ist es ferner, wenn der Winkel β2 das 0,12-fache bis 0,45-fache, vorzugsweise das 0,2-fache bis 0,3-fache, des Winkels β1 beträgt.

Um das Zusammenkleben der Teilchen weiter zu verringern, ist es vorteilhaft, wenn der Winkel β1 < 180 ° ist und insbesondere ein spitzer Winkel, vorzugsweise im Bereich von 18 ° bis 80 °, insbesondere von 20 ° bis 50 °, ist, und/oder wenn der Winkel β2 < 180 ° ist und insbesondere ein spitzer Winkel, vorzugsweise im Bereich von 8 ° bis 40 °, insbesondere von 4 ° bis 15 °, ist.

Platzsparend und für die industrielle Anwendung von Vorteil ist es, wenn die Gaszuleitung, das Gehäuse und die Gasableitung vertikal übereinander angeordnet sind.

Die Erfindung wird nachfolgend beispielhaft in bevorzugten Ausführungsbeispielen dargestellt.
Fig. 1 zeigt eine perspektivische Ansicht der erfindungsgemäßen Anordnung, wobei im rechten Teil der Figur der mit der Zufuhr- oder Plastifizierungseinheit, vorzugsweise einem Extruder, verbundene Teil der Anordnung dargestellt ist, an dem der links dargestellte Gebläseteil der erfindungsgemäßen Anordnung verschwenkbar gelagert ist.
Fig. 2 zeigt eine Schnittansicht E-E der Anordnung gemäß Fig. 3, wobei die Blickrichtung in Richtung des an die Anordnung angeschlossenen Extruders verläuft.
Fig. 3 zeigt einen Schnitt B-B gemäß Fig. 2.
Fig. 4 und 5 zeigen unterschiedliche Ausführungsformen betreffend die Lage der Anordnung im Bezug auf die Extruderwelle bzw. eine Lochplatte des Extruders.
Fig. 6 und 7 zeigen Schaubilder.
Fig. 8 zeigt eine Skizze zur Bestimmung des Werts b.

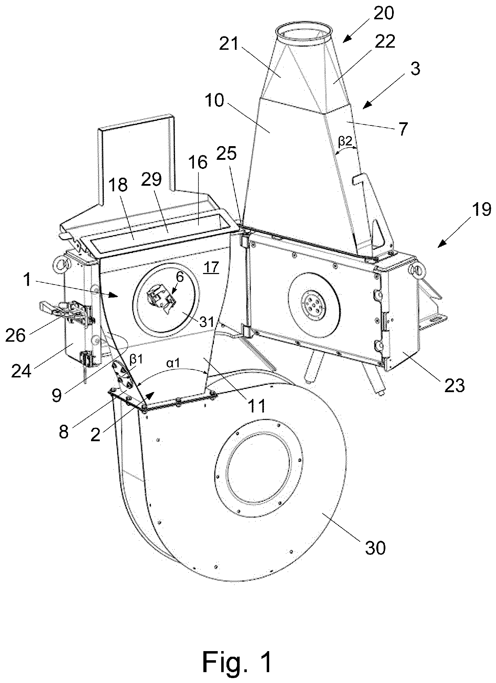

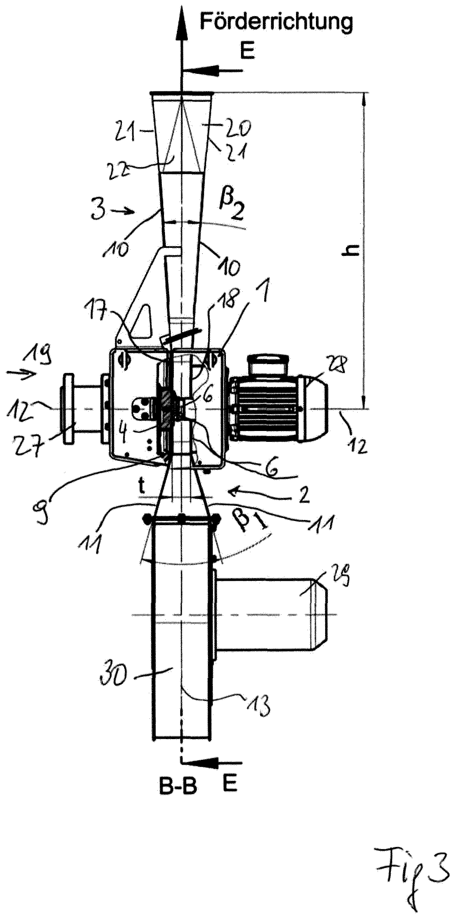

Die erfindungsgemäße Anordnung wird einer beliebigen Zufuhr- oder Plastifizierungseinheit 27, vorzugsweise einem Extruder, nachgeordnet bzw. an diese(n) angeschlossen, wobei die Einheit 27 nur in Fig. 3 mit ihrem Endbereich bzw. Endteil dargestellt ist. Der Endbereich, wie aus Fig. 1 ersichtlich, ist von einem kastenförmigen Tragteil 23 eines Gehäuses 1 aufgenommen bzw. an diesen angeschlossen und mit einer Lochplatte 4 für den Materialaustritt abgeschlossen, die in das Gehäuse 1 mündet. Die Förderrichtung der Einheit 27 ist schematisch mit einem Pfeil 19 dargestellt. Eine derartige Einheit kann auch von einer plastifiziertes und/oder geschmolzenes Material fördernden Druckleitung gebildet sein.

Wie Fig. 1 zeigt, liegt zwischen einer Gaszuleitung 2 und einer Gasableitung 3 das Gehäuse 1, dessen Vorderwand 17 und Rückwand 18 parallel zueinander verlaufen. In das Gehäuse 1 öffnet die Lochplatte 4 sowie ragt die Antriebswelle eines Abstreifers 6. Die Antriebswelle des Abstreifers 6 ist von einem Motor 28 angetrieben.

Wie in Fig. 1 dargestellt, ist an dem Tragteil 23 mittels eines beliebig gestaltbaren Schwenklagers 25 ein Tragteil 24 schwenkbar gelagert, der seinerseits den Motor 28 und den vom Motor 28 über eine Antriebswelle angetriebenen Abstreifer 6 trägt. Der Abstreifer 6 kommt bei einem auf den Tragteil 23 aufgeschwenkten Tragteil 24 an der Lochplatte 4 zum Anliegen, um dort das durch die Lochplatte 4 austretende Material abschaben. So werden im Gehäuse 1 bei gleichzeitigem Abtransport mit einem Gasstrom Granulatteilchen ausgebildet.

Das Schwenklager 25 für die Tragteile 23, 24 ist vorgesehen, um Wartungsarbeiten innerhalb des Gehäuses 1 einfach zu ermöglichen bzw. um Zutritt zum Abstreifer 6 und zur Lochplatte 4 zu erhalten.

Der Tragteil 23 trägt in seinem oberen Bereich eine Gasableitung 3 in Form eines sich verjüngenden Rohrs bzw. Kanals mit vier in Strömungsrichtung verlaufenden Kanten bzw. einer rechteckförmigen Querschnittfläche, an die ein Übergangsteil 20 mit Wandabschnitten 21, 22 anschließt, der mit einem gerundeten Querschnitt endet. Die Wandabschnitte 21 und 22 besitzen jeweils dieselbe Neigung wie die Seitenwandflächen 7 bzw. 10 der Gasableitung 3.

Bei eingeschwenktem Tragteil 24 kommt das am Tragteil 24 gelegene Gehäuse 1 mit seinem oberen Öffnungsquerschnitt 29 unterhalb der an diesen Öffnungsquerschnitt angepassten Querschnittsfläche der Gasableitung 3 zu liegen, sodass mit einem Gebläse 30 über eine Gaszuleitung 2 von unten in das Gehäuse 1 Gas eingeströmt und über das Gehäuse 1 in die Gasableitung 3 geleitet werden kann, wobei das Gas an der Lochplatte 4 und dem Abstreifer 6 vorbeiströmt. Die Lochplatte 4 mündet dicht vor oder in eine Öffnung 31 in der Vorderwand 17 des Gehäuses 1. Die Lochplatte 4 kann auch in das Gehäuse 1 ragen. Auf diese Weise können die der Lochplatte 4 austretenden Materialstränge vom Abstreifer 6 abgetrennt und direkt vom Gasstrom mitgenommen werden.

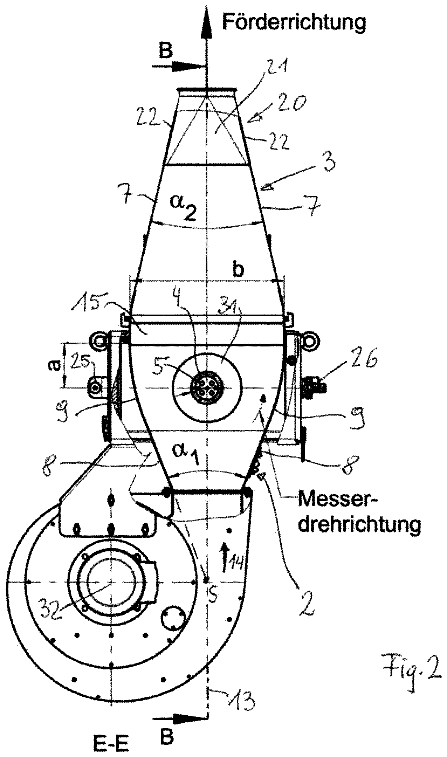

An das Gebläse 30 ist die zum Gehäuse 1 führende Gaszuleitung 2 angeschlossen. Wie aus Fig. 2 ersichtlich, sind die seitlichen Wandflächen 8 der Gaszuleitung 2, die senkrecht zur Ebene der Lochplatte 4 bzw. einer Schnittebene E-E bzw. zur Vorderwand 17 und Rückwand 18 des Gehäuses 1 verlaufen, unter einem Winkel α1 zueinander geneigt, wobei der Scheitel S dieses Winkels α1 auf der Mittellinie zwischen diesen beiden Wandflächen 8 bzw. auf der Mittellinie 13 des Gehäuses 1 bzw. einer Längssymmetrieachse des Gehäuses 1 liegt. Der Scheitel S des Winkels α1 kann auf der Höhe der Achse des Rotors des Gebläses 30 liegen.

An die beiden Wandflächen 8 schließen die Seitenwände 9 des Gehäuses 1 an, die strömungsabwärts divergieren und von innen gesehen, vorzugsweise zumindest über einen Teilbereich, leicht konvex gekrümmt sind. Im strömungsabwärts gelegenen Endbereich des Gehäuses 1 besitzt das Gehäuse 1 zwischen den Seitenwänden 9 eine Erstreckung bzw. einen Abstand b. An diesem Endbereich des Gehäuses 1 schließt die Gasableitung 3 an, deren seitliche Wandflächen 7 miteinander einen Winkel α2 einschließen, dessen Scheitel strömungsabwärts des Gehäuses 1 liegt. Man erkennt, dass der Winkel α1 größer ist als der Winkel α2.

Aus Fig. 3 ist ersichtlich, dass bei der an das Gebläse 30 anschließenden Gaszuleitung 2 die beiden senkrecht zu einer zur Schnittebene E-E bzw. einer zur Ebene der Lochplatte 4 senkrecht verlaufenden Ebene stehenden Seitenwandflächen 11 einen Winkel β1 einschließen, welcher Winkel β1 größer ist als der Winkel β2, der von den beiden ebenfalls zu dieser Ebene E-E senkrecht stehenden Seitenwandflächen 10 der Gasableitung 3 ausgebildet wird. Der Scheitel des Winkels β1 liegt strömungsabwärts der Gaszuleitung 2, vorzugsweise im Gehäuse 1. Der Scheitel des Winkels β2 liegt strömungsaufwärts der Gasableitung 3, vorzugsweise strömungsaufwärts des Gehäuses 1, insbesondere in der Gaszuleitung 2 bzw. strömungsaufwärts der Gaszuleitung 2.

Im Betrieb wird das Gebläse 30 mit dem Gebläsemotor 28 angetrieben und fördert einen Gasstrom über die Gaszuleitung 2 in das Gehäuse 1, welcher Gasstrom die mit dem Abstreifer 6 an der Lochplatte 4 abgetrennten Granulatteilchen aus dem Gehäuse 1 abführt und in die Gasableitung 3 mitnimmt. Diese Teilchen in Form von Granulaten, Würstchen bzw. unregelmäßig geformten Körpern können mit Hilfe des Gasstroms verfestigt werden. Diese Verfestigung kann durch eine thermische Beeinflussung, z.B. Abkühl- oder Trocknungswirkung des Gasstroms, oder aber auch durch den Gasstrom selbst induzierte chemische Reaktionen erfolgen.

Für den sicheren, raschen und möglichst kollisions- und ablagerungsfreien Transport der Teilchen sind die Winkel α1, α2 und in vorteilhafter Ausgestaltung auch β1, β2 zwischen den jeweiligen Wandflächen der Gaszuleitung 2 und der Gasableitung 3 von Bedeutung. Auch die Werte b und d sowie die Ausdehnung bzw. Aufweitung des Gehäuses 1 von der Lochplatte 4 strömungsabwärts sind für eine ablagerungsfreie Teilchenagglomeration von Vorteil.

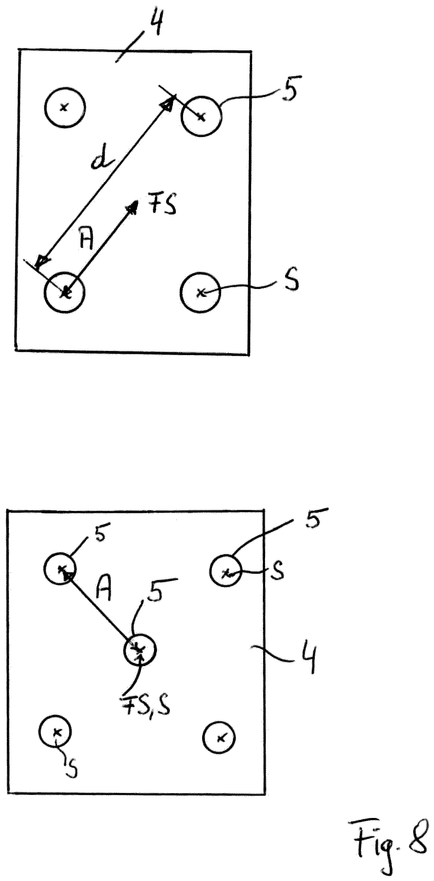

Der Querschnitt bzw. die Querschnittsfläche des Gehäuses 1 in seinem strömungsabwärtigen Endbereich zeigt einen Abstand b zwischen den seitlichen Wandflächen 9, der im Verhältnis zu einem für die Lochplatte 4 charakteristischen Wert d steht. Dieser Wert d wird durch Lage, Form und Anzahl der Ausnehmungen 5, die den Querschnitt des zu granulierenden Materials bestimmen, bestimmt. Da die in der Praxis für unterschiedliche Materialien eingesetzten Lochplatten 4 unregelmäßig verteilte und/oder ungleich große und/oder ungleiche Formen aufweisende und/oder eine unterschiedliche Anzahl von Ausnehmungen 5 besitzen können, wird der Wert d auf folgende Weise bestimmt: Es wird der gemeinsame Flächenschwerpunkt FS für alle vorhandenen Ausnehmungen 5 ermittelt. Ferner wird für jede Ausnehmung 5 der Abstand A des Flächenschwerpunkts S der jeweiligen Ausnehmung 5 von dem gemeinsamen Flächenschwerpunkt FS ermittelt. Die für alle vorhandenen Ausnehmungen 5 ermittelten Werte für den Abstand A werden arithmetisch gemittelt. Der doppelte Wert des arithmetischen Mittels entspricht sodann dem Wert d. Anhand von Fig. 8 wird diese Vorgangsweise zur Ermittlung des Werts d näher erläutert. In einer Lochplatte 4 sind vier Ausnehmungen 5 jeweils an den Eckpunkten eines gedachten Rechtecks angeordnet. Jede dieser Ausnehmungen besitzt als Flächenschwerpunkt S ihren Mittelpunkt, da die Ausnehmungen kreisförmig ausgebildet sind. Der gemeinsame Flächenschwerpunkt der vier Ausnehmungen 5 liegt im Zentrum dieser vier Ausnehmungen 5 und ist mit FS bezeichnet. Der Abstand zwischen diesem gemeinsamen Flächenschwerpunkt FS und den einzelnen Ausnehmungen 5 ist mit A bezeichnet. Der Abstand A ist für die vier Ausnehmungen 5 jeweils gleich groß, sodass die Summe, die für das arithmetische Mittel zu bilden ist, 4 * A beträgt. Nach Ermittlung des arithmetischen Mittels, das den Wert A besitzt, ergibt sich somit als Wert d = 2 * A. Diese Art der Ermittlung ist ohne Weiteres auch für elliptischen Querschnitt aufweisende Ausnehmungen 5 oder für kreisförmig angeordnete Anordnungen 5 anwendbar. Bei unregelmäßig ausgebildeten oder unterschiedliche Formen aufweisenden Ausnehmungen 5 ist für jede Ausnehmung ihr eigener Flächenschwerpunkt S zu ermitteln und aus der Summe der einzelnen Flächenschwerpunkte S kann sodann der gemeinsame Flächenschwerpunkt FS ermittelt werden.

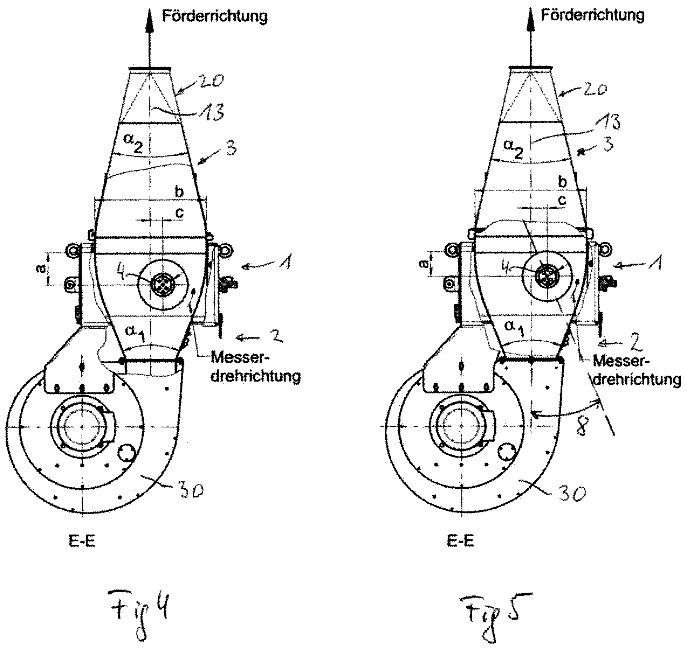

In Fig. 4 und 5 sind Lochplatten 4 dargestellt, deren Ausnehmungen 5 an den Ecken eines Quadrats angeordnet sind, wobei eine weitere Ausnehmung 5 im diagonalen Schnittpunkt dieses Quadrats liegt. Der Wert d ergibt sich somit als die Länge der Diagonale dieses Quadrats, an dessen Eckpunkten die Mittelpunkte bzw. Flächenschwerpunkte der kreisförmigen Ausnehmungen 5 gelegen sind. In Fig. 8 unten ist diese Anordnung von Ausnehmungen 5 deutlicher dargestellt.

Bei der in Fig. 1 und 2 dargestellten Ausführungsform schneiden die Achse des Endteils der Zufuhr- bzw. Plastifizierungseinheit 27 bzw. die Extruderachse sowie die durch den gemeinsamen Flächenschwerpunkt FS verlaufende und senkrecht zur Ebene der Lochplatte 4 stehende Mittellinie 12 der Lochplatte 4 die in Längsrichtung verlaufende Mittellinie 13 des Gehäuses 1. Für klebrige Materialien kann sich jedoch als vorteilhaft erweisen, wenn ein außermittiger Versatz der Lochplatte 4 bzw. ihrer Mittellinie 12 relativ bzw. seitlich zu dieser Mittellinie 13 erfolgt. Besonders bei stark klebrigen Materialien besteht die Gefahr, dass abgetrennte Teilchen untereinander kollidieren bzw. mit der Innenwandfläche des Gehäuses 1 in Kontakt kommen und aneinander haften bleiben oder sich am Gehäuse 1 aufbauen und den Durchgang verlegen.

Es hat sich als vorteilhaft erwiesen, wenn - wie in Fig. 4 und 5 dargestellt - die Mittellinie 12 der Lochplatte 4 bzw. die Achse der Zufuhr- oder Plastifizierungseinheit 27 bzw. der Flächenschwerpunkt FS der Lochplatte 4 um einen Betrag c seitlich zur Mittellinie 13 des Gehäuses 1 versetzt wird. Dieser Versatz erfolgt horizontal oder quer zur Strömungsrichtung in einer Ebene parallel zur Lochplatte 4 und kann gegebenenfalls zusätzlich auch vertikal bzw. in bzw. gegen die Strömungsrichtung erfolgen.

Der maximale seitliche Versatz c hängt vom Wert d ab, wobei es sich für die Praxis als ausgesprochen günstig erwiesen hat, wenn vorgesehen ist, dass c ≤ 2,5 * d ist. Der Wert von c wird abhängig vom Material und der Partikelgröße gewählt und ist einstellbar.

Strömungsaufwärts oder vertikal nach unten kann ein Versatz um einen Wert a ≤ 2,2 * d erfolgen. Es ergibt sich allenfalls ein Versatzvektor, der z.B. unter einem Winkel γ zur Längsmittellinie 13 geneigt ist, wie aus Fig. 5 ersichtlich ist.

Der seitliche Versatz erfolgt vorteilhafterweise in die Richtung, in der die Drehrichtung des Abstreifers 6 und die Strömungsrichtung des Gasstroms durch das Gehäuse 1 in dieselbe Richtung verlaufen.

Vorzugsweise fallen die Achse der Zufuhr- oder Plastifizierungseinheit 27 und die Mittellinie 12 der Lochplatte 4 zusammen. Der gemeinsame Flächenschwerpunkt FS liegt vorteilhaft auf dieser Achse bzw. der Mittellinie 12 der Lochplatte 4.

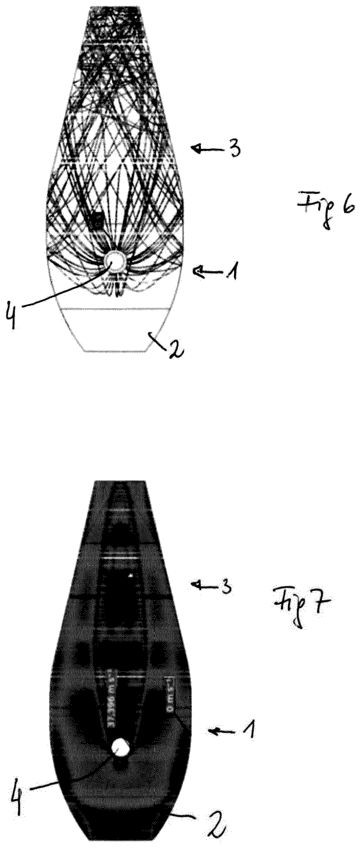

Fig. 6 zeigt Bahnen der durch die Lochscheibe 4 austretenden und vom Abstreifer 6 abgetrennten Granulatteilchen im Gehäuse 1 und in der Gasableitung 3. Man erkennt, dass die Teilchen entweder sofort strömungsabwärts befördert werden oder nach einer recht kurzen Bewegung, verursacht durch den Abstreifer, gegen die Strömungsrichtung des Gasstroms von diesem mitgenommen werden. Man erkennt ferner, dass die meisten Teilchenbahnen ungebrochen, d.h. ohne Kollisionen mit der Gehäuseinnenwandung bzw. Innenwandung der Gasleitung verlaufen. Insbesondere in dem Bereich, der unmittelbar an den Austritt der Granulatteilchen auf der Lochplatte 4 anschließt, und der für die Trocknung der Teilchen wichtig ist, sind ausgesprochen wenig Teilchenkollisionen erkennbar. Die einzelnen abgetrennten Granulatteilchen verfolgen eigenständige Flugbahnen und Kollisionen mit anderen Granulatteilchen treten nahezu nicht auf.

In Fig. 7 ist ein Geschwindigkeitsprofil über eine Längsschnittsfläche des Gehäuses 1 und der Gasableitung 3 parallel zur Lochplatte 4 dargestellt. Man erkennt, dass das Geschwindigkeitsprofil der Teilchen von außen nach innen abrupt zunimmt, und dass insbesondere im Mittenbereich des Gasstroms eine eklatant hohe Strömungsgeschwindigkeit gegenüber den Randbereichen herrscht. Dies bedeutet, insbesondere unter Berücksichtigung von Fig. 6, dass in den Randbereichen wesentlich weniger oder gar keine Teilchen transportiert werden, sondern nur im Mittenbereich des Gasstroms. Damit werden Wandkollisionen weitgehend vermieden.

## Patentansprüche

1. Anordnung zum Granulieren von plastifiziertem oder zumindest teilweise erweichtem oder zumindest teilweise aufgeschmolzenem Material, insbesondere Polymermaterial, umfassend ein Gehäuse (1) mit einer einen rechteckigen Querschnitt aufweisenden Gaszuleitung (2) und einer dieser gegenüberliegend am Gehäuse (1) angeschlossenen, einen rechteckigen Querschnitt aufweisenden Gasableitung (3), eine zumindest zum Teil im Gehäuse (1) gelegene Granuliereinheit mit einer in das Gehäuse (1) einspeisenden oder einmündenden Lochplatte (4) einer Zufuhr- oder Plastifizierungseinheit (27), vorzugsweise einem Extruder (27), und einen das durch die Ausnehmungen (5) der Lochplatte (4) austretende Material zerkleinernden bzw. abtrennenden Abstreifer (6),
**dadurch gekennzeichnet, dass** in einer parallel zur Ebene der Lochplatte (4) und/oder der Vorderwand (17) des Gehäuses (1) verlaufenden Ebene bzw. Schnittebene (E-E), die beiden senkrecht zu dieser Ebene stehenden seitlichen Wandflächen (7) der Gasableitung (3) miteinander einen Winkel α2 einschließen, und die beiden senkrecht zu dieser Ebene stehenden seitlichen Wandflächen (8) der Gaszuleitung (2) einen Winkel α1 einschließen, wobei sich die beiden Winkel α1, α2 zum Gehäuse (1) hin öffnen und wobei der Winkel α1 größer ist als der Winkel α2.

2. Anordnung nach Anspruch 1, **dadurch gekennzeichnet, dass** in der Schnittebene (E-E) bzw. in der Ebene parallel zur Ebene der Lochplatte (4) der Abstand der senkrecht zu dieser Ebene stehenden Seitenwände (9) des Gehäuses (1) in ihrem strömungsabwärts gelegenen Endbereich sowie der gegenseitige Abstand der daran anschließenden seitlichen, ebenfalls senkrecht zu dieser Ebene (E-E) stehenden Wandflächen (7) der Gasableitung (3) einen Wert b von 10 * d ≥ b ≥ 4 * d, vorzugsweise 8 * d ≥ b ≥ 5 * d, besitzt, wobei der Wert von d berechnet wird, indem der gemeinsame Flächenschwerpunkt (FS) für alle vorhandenen Ausnehmungen (5) der Lochplatte (4) ermittelt wird, für jede Ausnehmung (5) der Abstand des Flächenschwerpunkts (S) der jeweiligen Ausnehmung (5) von dem gemeinsamen Flächenschwerpunkt (FS) ermittelt wird, die für die vorhandenen Ausnehmungen (5) ermittelten Abstandswerte (A) arithmetisch gemittelt werden und der doppelte Wert des arithmetischen Mittels als Wert d festgelegt wird.

3. Anordnung nach Anspruch 2, **dadurch gekennzeichnet, dass** der Wert b dem größten gegenseitigen Abstand der Seitenwände (9) des Gehäuses (1) an ihrem strömungsabwärts gelegenen Endbereich sowie der seitlichen Wandflächen (7) der Gasableitung (3) an ihrem strömungsaufwärts gelegenen Endbereich entspricht.

4. Anordnung nach einem der Ansprüche 1 bis 3, **dadurch gekennzeichnet, dass** die beiden Seitenwandflächen (10) der Gasableitung (3), die senkrecht zu einer zur Ebene E-E bzw. senkrecht zu einer zur Ebene der Lochplatte (4) senkrechten Ebene stehen, miteinander einen Winkel β2 einschließen, und die ebenfalls senkrecht zu einer zur Ebene E-E bzw. senkrecht zu einer zur Lochplatte (4) senkrechten Ebene verlaufenden Seitenwandflächen (11) der Gaszuleitung (2) miteinander einen Winkel β1 einschließen, wobei sich die beiden Winkel β1, β2 vom Gehäuse (1) weg gerichtet öffnen und wobei der Winkel β1 größer ist als der Winkel β2.

5. Anordnung nach einem der Ansprüche 1 bis 4, **dadurch gekennzeichnet, dass** die zentrale Achse der Zufuhr- bzw. Plastifizierungseinheit (27), vorzugsweise eines Extruders, und/oder der gemeinsame Flächenschwerpunkt (FS) aller vorhandenen Ausnehmungen (5) bzw. die durch den Flächenschwerpunkt (FS) verlaufende Mittellinie (12) der Lochplatte (4) mittig bezüglich der Seitenwände (9) des Gehäuses (1) liegt und/oder in einer senkrecht zur Ebene der Lochplatte (4) stehenden und die Mittellinie (13) des Gehäuses (1) enthaltenden Symmetrieebene der Gaszuleitung (2) und/oder der Gasableitung (3) und/oder des Gehäuses (1) gelegen ist.

6. Anordnung nach einem der Ansprüche 2 bis 4, **dadurch gekennzeichnet, dass** die zentrale Achse der Zufuhr- bzw. Plastifizierungseinheit (27), vorzugsweise des Extruders, und/oder der gemeinsame Flächenschwerpunkt (FS) aller vorhandenen Ausnehmungen (5) bzw. die durch diesen verlaufende Mittellinie (12) der Lochplatte (4) bezüglich einer Mittellinie (13) des Gehäuses (1) und/oder einer senkrecht zur Ebene der Lochplatte (4) stehenden und die Mittellinie (13) enthaltenden Symmetrieebene der Gaszuleitung (2) und/oder der Gasableitung (3) und/oder bezüglich der Mitte zwischen den Seitenflächen (9) des Gehäuses (1) seitlich versetzt ist, wobei die seitliche Versetzung um einen Wert c, mit c ≤ 2,5 * d, in den Bereich des Gehäuses (1) erfolgt ist, in dem die Drehrichtung des Abstreifers (6) und die Richtung (14) der Gasströmung in die gleiche Richtung verlaufen.

7. Anordnung nach einem der Ansprüche 2 bis 6, **dadurch gekennzeichnet, dass** die zentrale Achse der Zufuhr- bzw. Plastifizierungseinheit (27), vorzugsweise eines Extruders, und/oder der gemeinsame Flächenschwerpunkt (FS) aller vorhandenen Ausnehmungen (5) bzw. eine durch diesen verlaufende Mittellinie (12) der Lochplatte (4), gegenüber der Stelle bzw. Querschnittsfläche des Gehäuses (1), an der - in Strömungsrichtung gesehen - die Seitenwände (9) des sich verbreiternden Gehäuses den gegenseitigen Abstand b angenommen haben, strömungsaufwärts in einem Abstand a angeordnet ist, wobei a ≤ 1,1 * d ist.

8. Anordnung nach einem der Ansprüche 2 bis 7, **dadurch gekennzeichnet, dass** in einem Übergangsbereich (15) vom Gehäuse (1) zur Gasableitung (3) das Gehäuse (1) und die Gasableitung (3) die gleiche rechteckförmige Querschnittsfläche (16) besitzen, wobei die Länge der längeren Rechteckseite den Wert b besitzt.

9. Anordnung nach einem der Ansprüche 1 bis 8, **dadurch gekennzeichnet,**
- **dass** die Querschnittsfläche des Gehäuses (1) im Übergangsbereich zur Gasableitung (3) nur 5 bis 20 %, vorzugsweise 10 bis 15 %, größer ist als die Querschnittsfläche der Gasableitung (3) in ihrem gehäusefernen Endbereich, und/oder
- **dass** die Querschnittsfläche des Gehäuses (1) auf der Höhe der Lochplatte (4) um 25 bis 35 % größer ist als die Querschnittsfläche der Gaszuleitung (2) in ihrem strömungsaufwärtigen Ende bzw. ihrem Anschluss an das Gebläse (30) , und/oder
- **dass** die Querschnittsfläche des Gehäuses (1) von der Höhe der Lochplatte (4) bis zum Übergangsbereich zur Gasableitung (3) zur Ausbildung eines Diffusors um 10 bis 20 % zunimmt.

10. Anordnung nach einem der Ansprüche 1 bis 9, **dadurch gekennzeichnet, dass** in der Ebene (E-E) parallel zur Lochplatte (4) die gegenüberliegenden Seitenwandflächen (9) des Gehäuses (1) zumindest über einen Teilbereich ihrer Längserstreckung einen von der Gaszuleitung (2) zur Gasableitung (3) hin divergierenden, vom Inneren des Gehäuses (1) aus gesehen konvex gekrümmten, insbesondere kontinuierlichen Verlauf besitzen.

11. Anordnung nach einem der Ansprüche 1 bis 8, **dadurch gekennzeichnet, dass** die Vorderwand (17) und die Rückwand (18) des Gehäuses (1) parallel zueinander und/oder parallel zur Ebene der Lochplatte (4) ausgerichtet sind.

12. Anordnung nach einem der Ansprüche 1 bis 11, **dadurch gekennzeichnet, dass** der Abstreifer (6) eine Antriebswelle besitzt, die im Gehäuse (1) von der Rückwand (18) des Gehäuses (1) zu der im Bereich der Vorderwand (17) des Gehäuses (1) gelegenen und den Endbereich der Zufuhr- bzw. Plastifizierungseinheit (27) darstellenden Lochplatte (4) verläuft.

13. Anordnung nach einem der Ansprüche 1 bis 12, **dadurch gekennzeichnet, dass** an die Gasableitung (3) ein Übergangsteil (20) angeschlossen ist, der den rechteckförmigen Querschnitt der Gasableitung (3) in einen Querschnitt mit rundem oder gekrümmtem Umfang überleitet, wobei der Übergangsteil (20) sich strömungsabwärts verjüngende Wandabschnitte (21, 22) aufweist, die insbesondere unter dem gleichen Winkel α2 geneigt an die seitlichen Wandflächen (7) bzw. Seitenwandflächen (10) der Gasableitung (3) anschließen bzw. diese, insbesondere in Form von Dreiecken, verlängern.

14. Anordnung nach einem der Ansprüche 1 bis 13, **dadurch gekennzeichnet, dass** der Scheitel (S) der Winkel α1, α2 auf der Mittellinie (13) bzw. einer Längssymmetrieebene durch die Gaszuleitung (2), das Gehäuse (1) und die Gasableitung (3) liegt.

15. Anordnung nach einem der Ansprüche 1 bis 14, **dadurch gekennzeichnet, dass** der Winkel α2 das 0,25-fache bis 0,75-fache, vorzugsweise das 0,4-fache bis 0,6-fache, des Winkels α1 beträgt.

16. Anordnung nach einem der Ansprüche 1 bis 15, **dadurch gekennzeichnet,**
- **dass** der Winkel α1 < 180 ° ist und vorzugsweise im Bereich von 15 ° bis 110 ° liegt und insbesondere ein spitzer Winkel von 20 ° bis 60 ° ist, und/oder
- **dass** der Winkel α2 < 180 ° ist und insbesondere ein spitzer Winkel, vorzugsweise im Bereich von 3,0 ° bis 82,5 °, insbesondere von 6 ° bis 36 °, ist.

17. Anordnung nach einem der Ansprüche 4 bis 16, **dadurch gekennzeichnet, dass** der Winkel β2 das 0,12-fache bis 0,45-fache, vorzugsweise das 0,2-fache bis 0,3-fache, des Winkels β1 beträgt.

18. Anordnung nach einem der Ansprüche 4 bis 17, **dadurch gekennzeichnet,**
- **dass** der Winkel β1 < 180 ° ist und insbesondere ein spitzer Winkel, vorzugsweise im Bereich von 18 ° bis 80 °, insbesondere von 20 ° bis 50 °, ist, und/oder
- **dass** der Winkel β2 < 180 ° ist und insbesondere ein spitzer Winkel, vorzugsweise im Bereich von 8 ° bis 40 °, insbesondere von 4 ° bis 15 °, ist.

19. Anordnung nach einem der Ansprüche 1 bis 18, **dadurch gekennzeichnet, dass** die Gaszuleitung (2), das Gehäuse (1) und die Gasableitung (3) vertikal übereinander angeordnet sind.

20. Anordnung nach einem der Ansprüche 1 bis 19, **dadurch gekennzeichnet, dass** die Mittellinie (12) der Lochplatte (4) und die zentrale Achse der Zufuhr- oder Plastifizierungseinheit (27) zusammenfallen.

21. Anordnung nach einem der Ansprüche 4 bis 12, **dadurch gekennzeichnet, dass** an die Gasableitung (3) ein Übergangsteil (20) angeschlossen ist, der den rechteckförmigen Querschnitt der Gasableitung (3) in einen Querschnitt mit rundem oder gekrümmtem Umfang überleitet, wobei der Übergangsteil (20) sich strömungsabwärts verjüngende Wandabschnitte (21, 22) aufweist, die insbesondere unter dem gleichen Winkel β2 geneigt an die seitlichen Wandflächen (7) bzw. Seitenwandflächen (10) der Gasableitung (3) anschließen bzw. diese, insbesondere in Form von Dreiecken, verlängern.

22. Anordnung nach einem der Ansprüche 4 bis 13, **dadurch gekennzeichnet, dass** der Scheitel (S) der Winkel β1, β2 auf der Mittellinie (13) bzw. einer Längssymmetrieebene durch die Gaszuleitung (2), das Gehäuse (1) und die Gasableitung (3) liegt.

## Claims

1. Arrangement for granulating plasticised or at least partially softened or at least partially melted material, in particular polymer material, comprising a housing (1) with a gas supply line (2) having a rectangular cross-section and a gas discharge line (3) which is connected opposite said gas supply line to the housing (1) and which has a rectangular cross-section, a granulating unit located at least partially in the housing (1) and having a perforated plate (4) of a feed or plasticising unit (27), preferably an extruder (27), which feeds or opens into the housing (1), and a scraper (6) which crushes or separates the material emerging through the recesses (5) of the perforated plate (4),
**characterised in that**, in a plane or sectional plane (E-E) running parallel to the plane of the perforated plate (4) and/or the front wall (17) of the housing (1), the two lateral wall surfaces (7) of the gas discharge line (3), which are perpendicular to this plane, enclose an angle α2 with one another, and the two lateral wall surfaces (8) of the gas supply line (2), which are perpendicular to this plane, enclose an angle α1, wherein the two angles α1, α2 open towards the housing (1) and wherein the angle α1 is greater than the angle α2.

2. Arrangement according to claim 1, **characterised in that** in the sectional plane (E-E) or in the plane parallel to the plane of the perforated plate (4), the distance between the side walls (9) of the housing (1), which are perpendicular to this plane, in their downstream end region, and the mutual distance of the lateral wall surfaces (7) of the gas discharge line (3), which are adjacent thereto and are likewise perpendicular to this plane (E-E), has a value b of 10 * d ≥ b ≥ 4 * d, preferably 8 * d ≥ b ≥ 5 * d, wherein the value of d is calculated by determining the common centroid (FS) for all the recesses (5) present in the perforated plate (4), determining for each recess (5) the distance of the centroid (5) of the respective recess (5) from the common centroid (FS), arithmetically averaging the distance values (A) determined for the recesses (5) present and setting twice the value of the arithmetic mean as the value d.

3. Arrangement according to claim 2, **characterised in that** the value b corresponds to the greatest mutual distance between the side walls (9) of the housing (1) at their downstream end region and the lateral wall surfaces (7) of the gas discharge line (3) at their upstream end region.

4. Arrangement according to any of claims 1 to 3, **characterised in that** the two side wall surfaces (10) of the gas discharge line (3), which are perpendicular to a plane perpendicular to the plane E-E or perpendicular to a plane perpendicular to the plane of the perforated plate (4), respectively, include an angle β2 with each other, and the side wall surfaces (11) of the gas supply line (2), which also extend perpendicular to a plane perpendicular to the plane E-E or perpendicular to a plane perpendicular to the perforated plate (4), respectively, include an angle β1 with one another, wherein the two angles β1, β2 open away from the housing (1) and wherein the angle β1 is greater than the angle β2.

5. Arrangement according to any of claims 1 to 4, **characterised in that** the central axis of the feed or plasticising unit (27), preferably of an extruder, and/or the common centroid (F5) of all the recesses (5) present and/or the centre line (12) of the perforated plate (4) running through the centroid (F5) lies centrally with respect to the side walls (9) of the housing (1) and/or is located in a plane of symmetry of the gas supply line (2) and/or of the gas discharge line (3) and/or of the housing (1) which is perpendicular to the plane of the perforated plate (4) and contains the centre line (13) of the housing (1).

6. Arrangement according to any of claims 2 to 4, **characterised in that** the central axis of the feed or plasticising unit (27), preferably of the extruder, and/or the common centroid (F5) of all the recesses (5) present and/or the centre line (12) of the perforated plate (4) running through said centroid is offset laterally with respect to a centre line (13) of the housing (1) and/or with respect to a plane of symmetry of the gas supply line (2) and/or of the gas discharge line (3) which is perpendicular to the plane of the perforated plate (4) and contains the centre line (13) and/or with respect to the centre between the side faces (9) of the housing (1), wherein the lateral offset is by a value c, where c ≤ 2.5 * d, in the region of the housing (1) in which the direction of rotation of the scraper (6) and the direction (14) of the gas flow run in the same direction.

7. Arrangement according to any of claims 2 to 6, **characterised in that** the central axis of the feed or plasticising unit (27), preferably of an extruder, and/or the common centroid (FS) of all the recesses (5) present, or a centre line (12) of the perforated plate (4) running through said centroid, is located opposite the point or cross-sectional area of the housing (1) at which - viewed in the direction of flow - the side walls (9) of the widening housing have assumed the mutual distance b, is arranged upstream at a distance a, wherein a ≤ 1.1 * d.

8. Arrangement according to any of claims 2 to 7, **characterised in that** in a transition region (15) from the housing (1) to the gas discharge line (3), the housing (1) and the gas discharge line (3) have the same rectangular cross-sectional area (16), wherein the length of the longer rectangular side has the value b.

9. Arrangement according to any of claims 1 to 8, **characterised in that**
- the cross-sectional area of the housing (1) in the transition region to the gas discharge line (3) is only 5 to 20%, preferably 10 to 15%, larger than the cross-sectional area of the gas discharge line (3) in its end region remote from the housing, and/or
- the cross-sectional area of the housing (1) at the level of the perforated plate (4) is 25 to 35% larger than the cross-sectional area of the gas supply line (2) in its upstream end or its connection to the blower (30), and/or
- the cross-sectional area of the housing (1) increases by 10 to 20% from the height of the perforated plate (4) to the transition region to the gas discharge line (3) to form a diffuser.

10. Arrangement according to any of claims 1 to 9, **characterised in that** in the plane (E-E) parallel to the perforated plate (4), the opposite side wall surfaces (9) of the housing (1) have, at least over a partial region of their longitudinal extent, a convexly curved, in particular continuous, course diverging from the gas supply line (2) towards the gas discharge line (3) as seen from the interior of the housing (1).

11. Arrangement according to any of claims 1 to 8, **characterised in that** the front wall (17) and the rear wall (18) of the housing (1) are aligned parallel to one another and/or parallel to the plane of the perforated plate (4).

12. Arrangement according to any of claims 1 to 11, **characterised in that** the scraper (6) has a drive shaft which runs in the housing (1) from the rear wall (18) of the housing (1) to the perforated plate (4) located in the region of the front wall (17) of the housing (1) and constituting the end region of the feed or plasticising unit (27).

13. Arrangement according to any of the claims 1 to 12, **characterised in that** a transition part (20) is connected to the gas discharge line (3) and transitions the rectangular cross-section of the gas discharge line (3) into a cross-section with a round or curved circumference, wherein the transition part (20) has wall sections (21, 22) tapering downstream, which wall sections are connected, in particular inclined at the same angle α2 to the lateral wall surfaces (7) or side wall surfaces (10) of the gas discharge line (3) or extend them, in particular in the form of triangles.

14. Arrangement according to any of claims 1 to 13, **characterised in that** the apex (5) of the angles α1, α2 lies on the centre line (13) or a longitudinal plane of symmetry through the gas supply line (2), the housing (1) and the gas discharge line (3).

15. Arrangement according to any of claims 1 to 14, **characterised in that** the angle α2 is 0.25 times to 0.75 times, preferably 0.4 times to 0.6 times, the angle α1.

16. Arrangement according to any of claims 1 to 15, **characterised in that**
- the angle α1 is < 180° and preferably lies in the range from 15° to 110° and is in particular an acute angle of 20° to 60°, and/or
- the angle α2 is < 180° and is preferably an acute angle, preferably in the range from 3.0° to 82.5°, in particular from 6° to 36°.

17. Arrangement according to any of claims 4 to 16, **characterised in that** the angle β2 is 0.12 times to 0.45 times, preferably 0.2 times to 0.3 times, the angle β1.

18. Arrangement according to any of claims 4 to 17, **characterised in that**
- the angle β1 is < 180° and is in particular an acute angle, preferably in the range from 18° to 80°, in particular from 20° to 50°, and/or
- the angle β2 is < 180° and is in particular an acute angle, preferably in the range from 8° to 40°, in particular from 4° to 15°.

19. Arrangement according to any of claims 1 to 18, **characterised in that** the gas supply line (2), the housing (1) and the gas discharge line (3) are arranged vertically one above the other.

20. Arrangement according to any of claims 1 to 19, **characterised in that** the centre line (12) of the perforated plate (4) and the central axis of the feed or plasticising unit (27) coincide.

21. Arrangement according to any of claims 4 to 12, **characterised in that** a transition part (20) is connected to the gas discharge line (3) and transitions the rectangular cross-section of the gas discharge line (3) into a cross-section with a round or curved circumference, wherein the transition part (20) has wall sections (21, 22) tapering downstream, which wall sections are connected, in particular inclined at the same angle β2 to the lateral wall surfaces (7) or side wall surfaces (10) of the gas discharge line (3) or extend them, in particular in the form of triangles.

22. Arrangement according to any of claims 4 to 13, **characterised in that** the apex (5) of the angles β1, β2 lies on the centre line (13) or a longitudinal plane of symmetry through the gas supply line (2), the housing (1) and the gas discharge line (3).

## Revendications

1. Agencement pour la granulation de matériau plastifié ou au moins partiellement ramolli ou au moins partiellement fondu, en particulier de matériau polymère, comprenant un boîtier (1) avec un conduit d'amenée de gaz (2) présentant une section transversale rectangulaire et un conduit de sortie de gaz (3) raccordé au boîtier (1) à l'opposé de celui-ci, présentant une section transversale rectangulaire, une unité de granulation située au moins en partie dans le boîtier (1) avec une plaque perforée (4) d'une unité d'alimentation ou de plastification (27), de préférence une extrudeuse (27), alimentant ou débouchant dans le boîtier (1), et un racleur de broyage ou de séparation (6) du matériau sortant par les évidements (5) de la plaque perforée (4).
**caractérisé en ce que**, dans un plan ou plan de coupe (E-E) s'étendant parallèlement au plan de la plaque perforée (4) et/ou de la paroi avant (17) du boîtier (1), les deux surfaces de paroi latérales (7) du conduit d'évacuation de gaz (3) situées perpendiculairement à ce plan forment mutuellement un angle α2, et les deux surfaces de paroi latérales (8) du conduit d'amenée de gaz (2) situées perpendiculairement à ce plan forment un angle α1, dans lequel les deux angles α1, α2 s'ouvrent vers le boîtier (1) et dans lequel l'angle α1 est supérieur à l'angle α2.

2. Agencement selon la revendication 1, **caractérisé en ce que**, dans le plan de coupe (E-E) ou dans le plan parallèle au plan de la plaque perforée (4), la distance entre les parois latérales (9) du boîtier (1) situées perpendiculairement audit plan dans leur zone d'extrémité située en aval, ainsi que la distance mutuelle entre les surfaces de paroi (7) latérales de l'évacuation de gaz (3) qui s'y raccordent et qui sont également situées perpendiculairement audit plan (E-E), possède une valeur b de 10 ^{∗} d≥b≥4^{∗}d, de préférence 8* d ≥ b ≥ 5 * d, dans lequel la valeur de d est calculée en déterminant le barycentre de surface (FS) commun pour tous les évidements (5) existants de la plaque perforée (4), en déterminant pour chaque évidement (5) la distance du barycentre de surface (S) de l'évidement (5) respectif par rapport au barycentre de surface (FS) commun, en faisant la moyenne arithmétique des valeurs de distance (A) déterminées pour les évidements (5) existants et en fixant le double de la valeur de la moyenne arithmétique comme valeur d.

3. Agencement selon la revendication 2, **caractérisé en ce que** la valeur b correspond à la plus grande distance mutuelle entre les parois latérales (9) du boîtier (1) au niveau de leur zone d'extrémité située en aval et les surfaces de paroi latérales (7) du conduit de gaz (3) au niveau de leur zone d'extrémité située en amont.

4. Agencement selon l'une quelconque des revendications 1 à 3, **caractérisé en ce que** les deux faces de paroi latérale (10) du conduit d'évacuation de gaz (3) perpendiculaires à un plan perpendiculaire au plan E-E ou perpendiculaire à un plan de la plaque perforée (4) forment ensemble un angle β2, et les surfaces de paroi latérale (11) du conduit d'amenée de gaz (2) s'étendant également perpendiculairement à un plan perpendiculaire au plan E-E ou perpendiculairement à une plaque perforée (4) forment ensemble un angle β1, dans lequel les deux angles β1, β2 s'ouvrent en s'éloignant du boîtier (1) et dans lequel l'angle β1 est supérieur à l'angle β2.

5. Agencement selon l'une quelconque des revendications 1 à 4, **caractérisé en ce que** l'axe central de l'unité d'alimentation ou de plastification (27), de préférence d'une extrudeuse, et/ou le centre de gravité de surface commun (FS) de tous les évidements existants (5) ou la ligne médiane (12) de la plaque perforée (4) s'étendant à travers le centre de gravité de surface (FS) se trouve au centre par rapport aux parois latérales (9) du boîtier (1) et/ou est située dans un plan de symétrie du conduit d'amenée de gaz (2) et/ou du conduit d'évacuation de gaz (3) et/ou du boîtier (1) qui est perpendiculaire au plan de la plaque perforée (4) et qui contient la ligne médiane (13) du boîtier (1).

6. Agencement selon l'une quelconque des revendications 2 à 4, **caractérisé en ce que** l'axe central de l'unité d'alimentation ou de plastification (27), de préférence de l'extrudeuse, et/ou le centre de gravité de surface commun (FS) de tous les évidements (5) existants, ou la ligne médiane (12) de la plaque perforée (4) s'étendant à travers ceux-ci est décalée latéralement par rapport à une ligne médiane (13) du boîtier (1) et/ou à un plan de symétrie du conduit d'amenée de gaz (2) et/ou du conduit d'évacuation de gaz (3) perpendiculaire au plan de la plaque perforée (4) et contenant la ligne médiane (13) et/ou par rapport au milieu entre les parois latérales (9) du boîtier (1), dans lequel le décalage latéral a été effectué d'une valeur c, avec c ≤ 2,5 * d, dans la zone du boîtier (1) dans laquelle le sens de rotation du racleur (6) et la direction (14) de l'écoulement de gaz s'étendent dans la même direction.

7. Agencement selon l'une quelconque des revendications 2 à 6, **caractérisé en ce que** l'axe central de l'unité d'alimentation ou de plastification (27), de préférence d'une extrudeuse, et/ou le centre de gravité de surface commun (FS) de tous les évidements existants (5) ou une ligne médiane (12) de la plaque perforée (4) s'étendant à travers celui-ci est agencé(e) en amont à une distance a par rapport à l'endroit ou à la surface de section transversale du boîtier (1) où, vu dans la direction d'écoulement, les parois latérales (9) du boîtier s'élargissant ont adopté la distance mutuelle b, dans lequel a ≤ 1,1 * d.

8. Agencement selon l'une quelconque des revendications 2 à 7, **caractérisé en ce que**, dans une zone de transition (15) entre le boîtier (1) et le conduit d'évacuation de gaz (3), le boîtier (1) et le conduit d'évacuation de gaz (3) possèdent la même surface de section transversale rectangulaire (16), dans lequel la longueur du côté le plus long du rectangle possède la valeur b.

9. Agencement selon l'une quelconque des revendications 1 à 8, **caractérisé en ce que**
- la surface de section transversale du boîtier (1) dans la zone de transition vers l'évacuation de gaz (3) est seulement de 5 à 20 %, de préférence de 10 à 15 %, plus grande que la surface de section transversale de l'évacuation de gaz (3) dans sa zone d'extrémité éloignée du boîtier, et/ou
- la surface de section transversale du boîtier (1) à la hauteur de la plaque perforée (4) est supérieure de 25 à 35 % à la surface de section transversale du conduit d'amenée de gaz (2) dans son extrémité située en amont ou son raccordement à la soufflante (30), et/ou
- la surface de section transversale du boîtier (1) augmente de 10 à 20 % depuis la hauteur de la plaque perforée (4) jusqu'à la zone de transition vers l'évacuation de gaz (3) pour former un diffuseur.

10. Agencement selon l'une quelconque des revendications 1 à 9, **caractérisé en ce que**, dans le plan (E-E) parallèle à la plaque perforée (4), les surfaces de paroi latérale (9) opposées du boîtier (1) possèdent, au moins sur une zone partielle de leur extension longitudinale, un tracé divergent du conduit d'amenée de gaz (2) vers le conduit d'évacuation de gaz (3), incurvé de manière convexe, en particulier continu, vu de l'intérieur du boîtier (1).

11. Agencement selon l'une quelconque des revendications 1 à 8, **caractérisé en ce que** la paroi avant (17) et la paroi arrière (18) du boîtier (1) sont orientées parallèlement entre elles et/ou parallèlement au plan de la plaque perforée (4).

12. Agencement selon l'une quelconque des revendications 1 à 11, **caractérisé en ce que** le racleur (6) possède un arbre d'entraînement qui s'étend dans le boîtier (1) depuis la paroi arrière (18) du boîtier (1) jusqu'à la plaque perforée (4) située au niveau de la paroi avant (17) du boîtier (1) et constituant la zone d'extrémité de l'unité d'alimentation ou de plastification (27).

13. Agencement selon l'une quelconque des revendications 1 à 12, **caractérisé en ce qu'**une partie de transition (20) est raccordée au conduit d'évacuation de gaz (3), qui fait passer la section transversale rectangulaire du conduit d'évacuation de gaz (3) à une section transversale à périmètre rond ou incurvé, dans lequel la partie de transition (20) présente des sections de paroi (21, 22) qui se rétrécissent vers l'aval et qui se raccordent en particulier inclinées sous le même angle α2 par rapport aux surfaces de paroi latérales (7) ou aux surfaces de paroi latérales (10) du conduit d'évacuation de gaz (3) ou les prolongent, en particulier sous forme de triangles.

14. Agencement selon l'une quelconque des revendications 1 à 13, **caractérisé en ce que** le sommet (5) des angles α1, α2 est situé sur la ligne médiane (13) ou un plan de symétrie longitudinal passant par le conduit d'amenée de gaz (2), le boîtier (1) et le conduit d'évacuation de gaz (3).

15. Agencement selon l'une quelconque des revendications 1 à 14, **caractérisé en ce que** l'angle α2 est égal à 0,25 fois à 0,75 fois, de préférence à 0,4 fois à 0,6 fois, l'angle α1.

16. Agencement selon l'une quelconque des revendications 1 à 15, **caractérisé en ce que**
- l'angle α1 est < 180 ° et se situe de préférence dans la plage de 15 ° à 110 ° et est en particulier un angle aigu de 20 ° à 60 °, et/ou
- l'angle α2 est <180 ° et est en particulier un angle aigu, de préférence dans la plage de 3,0 ° à 82,5 °, en particulier de 6 ° à 36 °.

17. Agencement selon l'une quelconque des revendications 4 à 16, **caractérisé en ce que** l'angle β2 est égal à 0,12 fois à 0,45 fois, de préférence à 0,2 fois à 0,3 fois, l'angle β1.

18. Agencement selon l'une quelconque des revendications 4 à 17, **caractérisé en ce que**
- l'angle β1 est < 180 ° et est en particulier un angle aigu, de préférence dans la plage de 18 ° à 80 °, en particulier de 20 ° à 50 °, et/ou
- l'angle β2 est < 180 ° et est en particulier un angle aigu, de préférence dans la plage de 8 ° à 40 °, en particulier de 4 ° à 15 °.

19. Agencement selon l'une quelconque des revendications 1 à 18, **caractérisé en ce que** le conduit d'amenée de gaz (2), le boîtier (1) et le conduit d'évacuation de gaz (3) sont agencés de manière verticale et superposée.

20. Agencement selon l'une quelconque des revendications 1 à 19, **caractérisé en ce que** la ligne médiane (12) de la plaque perforée (4) et l'axe central de l'unité d'alimentation ou de plastification (27) coïncident.

21. Agencement selon l'une quelconque des revendications 4 à 12, **caractérisé en ce qu'**une partie de transition (20) est raccordée au conduit d'évacuation de gaz (3), qui fait passer la section transversale rectangulaire du conduit d'évacuation de gaz (3) à une section transversale à périmètre rond ou incurvé, dans lequel la partie de transition (20) présente des sections de paroi (21, 22) qui se rétrécissent vers l'aval et qui se raccordent en particulier inclinées sous le même angle β2 par rapport aux surfaces de paroi latérales (7) ou aux surfaces de paroi latérales (10) du conduit d'évacuation de gaz (3) ou les prolongent, en particulier sous forme de triangles.

22. Agencement selon l'une quelconque des revendications 4 à 13, **caractérisé en ce que** le sommet (5) des angles β1, β2 est situé sur la ligne médiane (13) ou un plan de symétrie longitudinal passant par le conduit d'amenée de gaz (2), le boîtier (1) et le conduit d'évacuation de gaz (3).
